# DEMANDE DE BREVET EUROPEEN

(11) **EP 2 009 956 A2**
(43) Date de publication de la demande: **31.12.2008**
(21) Numéro de dépôt: 08290584.5
(22) Date de dépôt: 19.06.2008
(51) Int. Cl.: H04R 25/00

(54) **Dispositif de contrôle de l'éloignement d'un accessoire portable de téléphonie, tel qu'une oreillette, et d'un téléphone cellulaire**

(30) Priorité: 25.06.2007 FR 0755990
(71) Demandeur: Modelabs Technologies Limited, Hong Kong (HK)
(72) Inventeur: Ponticelli, Guillaume, Jardine's Lookout Hong Kong (CN); Desormiere, Olivier, 92190 - Meudon (FR); Boussemart, Franck, 45510 - Tigy (FR)
(74) Mandataire: Kedinger, Jean-Paul

(57) **Abrégé**

La présente invention se rapporte à un dispositif de contrôle de l'éloignement d'un accessoire portable de téléphonie (20), par exemple une oreillette ou un casque, comportant au moins un haut-parleur (23a) et fonctionnant selon une norme de télécommunication sans fil telle que la norme Bluetooth, et d'un téléphone cellulaire (10) fonctionnant avec la même norme et avec lequel ledit accessoire est jumelé, ce dispositif étant caractérisé en ce qu'il comprend un circuit électronique (24) intégré dans l'accessoire de téléphonie (20) ou dans le téléphone cellulaire (10) et conçu pour permettre à l'appareil (10 ; 20) dans lequel il est intégré d'émettre une alarme sonore lorsque le téléphone cellulaire (10) et l'accessoire de téléphonie (20) sont situés à distance l'un de l'autre, au-delà d'un périmètre déterminé.

## Description

La présente invention concerne un dispositif de contrôle de l'éloignement d'un accessoire portable de téléphonie portable, tel qu'une oreillette, et d'un téléphone cellulaire.

Actuellement, les téléphones cellulaires et les oreillettes jumelés ensemble par l'intermédiaire d'une liaison sans fil de type Bluetooth ne peuvent fonctionner que s'ils sont disposés à proximité l'un de l'autre, en général à l'intérieur un périmètre inférieur à environ 10 mètres. Au-delà de cette zone, la liaison sans fil est trop faible et les pertes de signal sont trop importantes pour que la communication puisse s'effectuer correctement. Dans ce cas, les appels téléphoniques sont manqués.

Par définition, un téléphone cellulaire et une oreillette sont destinés à fonctionner sans être nécessairement placés à proximité immédiate l'un de l'autre. L'oreillette ou le téléphone peut ainsi être posé(e) sur une table, rangé(e) dans un sac ou logé(e) sur un support adopté, par exemple un socle de recharge. Comme cela a été indiqué précédemment, si le téléphone et l'oreillette sont trop éloignés l'un de l'autre, la liaison ne passe pas et un appel entrant n'aboutira pas de sorte que l'utilisateur n'en sera pas informé. L'oreillette ou le téléphone peut également être dérobé ou perdu. Dans ce cas, l'utilisateur n'est pas prévenu de ce vol ou de cette perte et il manque également tous les appels entrants.

Il n'existe à l'heure actuelle aucun dispositif permettant d'indiquer à un utilisateur que l'oreillette est éloignée du téléphone au-delà de la limite de fonctionnement.

Un but de la présente invention est donc de résoudre le problème cité précédemment à l'aide d'une solution simple à mettre en oeuvre, fiable et peu coûteuse.

Ainsi, la présente invention a pour objet un dispositif de contrôle de l'éloignement d'un accessoire de téléphonie portable comportant au moins un haut-parleur et fonctionnant selon une norme de télécommunication sans fil telle que la norme Bluetooth, par exemple une oreillette ou un casque, et d'un téléphone cellulaire fonctionnant avec la même norme et avec lequel ledit accessoire est jumelé, ce dispositif étant caractérisé en ce qu'il comprend un circuit électronique intégré dans l'accessoire de téléphonie ou dans le téléphone cellulaire et conçu pour permettre à l'appareil dans lequel il est intégré d'émettre une alarme sonore lorsque le téléphone cellulaire et l'accessoire de téléphonie sont situés à distance l'un de l'autre, au-delà d'un périmètre déterminé.

Selon des modes de réalisation préférés, le dispositif selon la présente invention peut comprendre en outre l'une au moins des caractéristiques suivantes :
- un moyen est prévu pour atténuer le volume de l'alarme sonore lorsque l'appareil émettant celle-ci est à proximité immédiate de l'oreille d'une personne ;
- un capteur de présence humaine est couplé au moyen d'atténuation du volume de l'alarme ;
- le circuit électronique et le capteur de présence humaine sont situés dans l'accessoire de téléphonie ;
- le capteur de présence humaine comporte un aimant intégré dans un support prévu pour recevoir l'accessoire de téléphonie et coopérant avec le haut-parleur de ce dernier de sorte que, lorsque l'accessoire de téléphonie repose sur le support, le capteur détecte la présence dudit accessoire par accouplement électromagnétique de l'aimant et du haut parleur et désactive le moyen d'atténuation du volume de l'alarme ;
- le capteur de présence humaine est couplé à l'alimentation de l'accessoire de téléphonie de manière à le mettre en mode veille lorsque ce dernier repose sur le support ;
- l'accessoire de téléphonie est équipé d'un autre haut-parleur disposé à l'opposé du premier haut-parleur et destiné à être activé à la place de ce dernier pour émettre l'alarme sonore lorsque l'accessoire de téléphonie est sur l'oreille de l'utilisateur ;
- le dispositif comporte un circuit de détection de l'éloignement de l'accessoire de téléphonie et du téléphone cellulaire par mesure d'une variation de la fréquence d'apparition d'au moins un bit d'erreur dans les trames du signal numérique de données échangé entre les deux appareils ;
- le dispositif comporte un circuit de détection de l'éloignement de l'accessoire de téléphonie et du téléphone cellulaire par mesure, au niveau de l'accessoire de téléphonie, de la diminution de puissance de réception du signal numérique de données échangé avec le téléphone cellulaire ;
- le volume sonore de l'alarme est réglé pour que celle-ci puisse être entendue dans un rayon d'environ 10 mètres autour de l'appareil qui l'émet ; et
- l'accessoire de téléphonie comporte un bouton d'activation ou de désactivation du déclenchement de l'alarme sonore.

L'invention va maintenant être décrite plus en détail en référence à des modes de réalisation particuliers donnés à titre d'illustration uniquement et représentés sur les figures annexées dans lesquelles :
- la figure 1 est une vue schématique d'un téléphone cellulaire, d'une oreillette et d'un support pour celle-ci ; et
- la figure 2 est un organigramme détaillant le fonctionnement du dispositif de contrôle d'éloignement conforme à la présente invention.

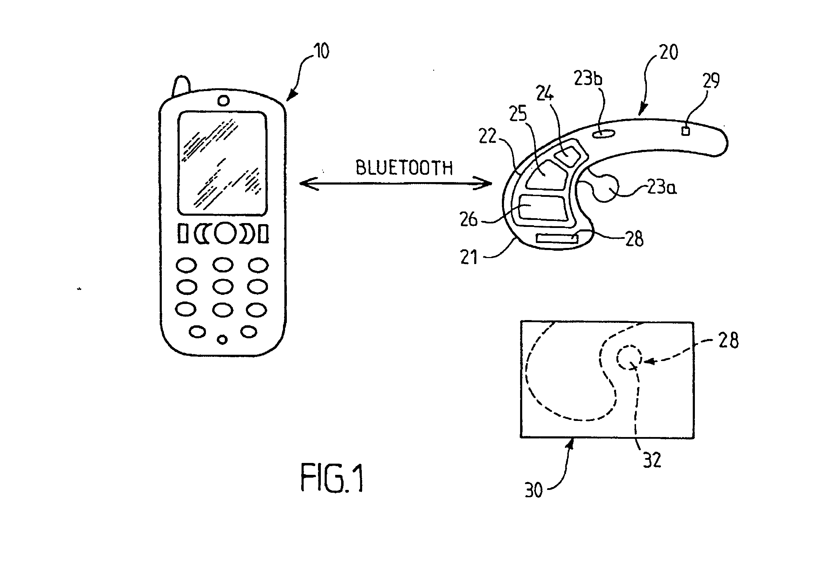

La figure 1 représente de manière schématisée un téléphone cellulaire 10 et une oreillette 20. Ces deux appareils de communication téléphonique sont jumelés l'un à l'autre de manière connue grâce à une liaison sans fil à la norme Bluetooth.

L'oreillette 20 comporte une coque ergonomique 21 adaptée pour reposer localement de manière conventionnelle sur le pavillon de l'oreille d'un utilisateur.

La coque 21 renferme une carte électronique 22 de type courant et nécessaire au fonctionnement de l'oreillette 20, ainsi qu'un premier haut-parleur externe 23a destiné à pénétrer localement dans le pavillon de l'oreille.

La carte électronique 22 comporte un circuit électronique spécifique 24 couplé avec le premier haut-parleur 23a. Ce circuit électronique 24 permet, lorsque l'oreillette 20 se trouve au-delà d'un rayon de 10 m du téléphone cellulaire 10, de déclencher une alarme sonore émise par l'intermédiaire du premier haut-parleur 23a avec un volume élevé audible au-delà du périmètre indiqué.

Ainsi, lorsque l'utilisateur a perdu son oreillette 20, ou qu'elle a été volée, l'alarme sonore est émise automatiquement pour l'informer que son oreillette est hors du périmètre et qu'il doit donc partir à sa recherche, notamment s'il souhaite établir une communication téléphonique.

Pour cela, un circuit de détection d'éloignement 25 est prévu sur la carte électronique 22. Ce circuit de détection 25 fonctionne par mesure d'une variation de la fréquence d'apparition d'au moins un bit d'erreur dans les trames du signal numérique de données échangé entre l'oreillette 20 et le téléphone cellulaire 10.

Selon une variante de réalisation, le circuit de détection d'éloignement 25 fonctionne par mesure, au niveau de l'oreillette 20, de la diminution de puissance de réception du signal numérique de données échangé avec le téléphone cellulaire 20.

Ainsi, l'oreillette 20 est constamment informée de sa présence ou non à l'intérieur du périmètre déterminé par rapport au téléphone cellulaire 10.

Si l'utilisateur porte l'oreillette 20 sur son oreille et que son téléphone cellulaire 10 a été volé, perdu, ou que ce dernier se trouve tout simplement au-delà du périmètre défini, il est nécessaire de pouvoir atténuer le volume de l'alarme pour éviter d'endommager son audition.

A cet effet, la carte électronique 22 comporte un élément 26 d'atténuation du volume de l'alarme sonore. Cet atténuateur 26 est couplé avec un capteur de présence humaine 28.

Ainsi, lorsque l'oreillette 20 n'est pas sur l'oreille de l'utilisateur, par exemple lorsqu'elle repose sur un support 30, l'alarme sonore conserve son volume élevé. Dans le cas contraire, lorsqu'il a été détecté que l'oreillette 20 est sur l'oreille de l'utilisateur, l'atténuateur 26 se déclenche pour réduire fortement le volume de l'alarme sonore, ce qui évite d'émettre cette dernière directement dans l'oreille de l'utilisateur.

Avantageusement, le capteur de présence humaine 28 comporte un aimant 32 intégré dans le support 30 et coopérant avec le haut-parleur 23a de l'oreillette 20. Lorsque l'oreillette 20 repose sur le support 30, le capteur 28 détecte sa présence par accouplement électromagnétique de l'aimant 32 et du haut-parleur 23a. Cela a pour effet de désactiver l'atténuateur 26, ce qui permet à l'alarme sonore d'être émise avec son volume maximum quand le téléphone cellulaire est hors du périmètre défini, par exemple en cas de vol.

De préférence, le capteur de présence humaine 28 est couplé à l'alimentation de l'oreillette 20 de manière à mettre celle-ci en mode veille lorsqu'elle repose sur son support 30.

L'oreillette 20 peut également être pourvue d'un second haut-parleur 23b, disposé à l'opposé du premier haut-parleur 23a, c'est-à-dire sur la partie externe de la coque 21 qui ne repose pas contre l'oreille de l'utilisateur. Ce second haut-parleur 23b est aussi relié à la carte électronique 22, et en particulier au circuit électronique 24 de déclenchement de l'alarme.

Cette solution est particulièrement adaptée dans le cas où il n'existe pas de capteur de présence humaine 28 ni d'atténuateur 26 de volume intégré dans l'oreillette 20. En effet, dans ce cas, l'oreillette ne sait pas si elle est portée sur l'oreille d'un utilisateur ou pas. Par conséquent, le circuit électronique 24 donne instruction directement au second haut-parleur 23b d'émettre l'alarme sonore pour ne pas endommager l'audition de l'utilisateur. Simultanément, le premier haut-parleur n'est pas désactivé car il peut être en attente d'une communication téléphonique une fois l'oreille et le téléphone cellulaire rassemblés dans le périmètre déterminé.

Un bouton 29 d'activation ou de désactivation du déclenchement de l'alarme sonore peut également être prévu sur l'oreillette 20.

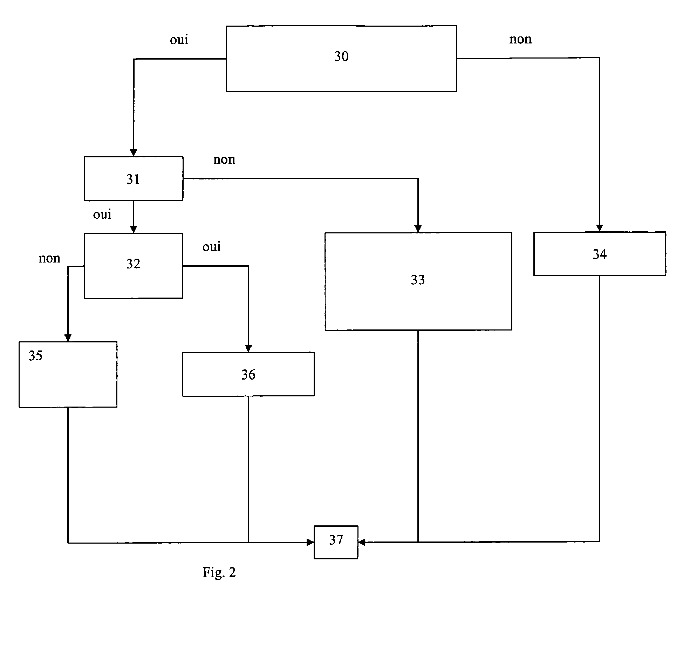

L'organigramme de la figure 2 résume de manière simple le fonctionnement du dispositif ainsi décrit et les différentes possibilités concernant le déclenchement ou non de l'alarme et la sélection du haut-parleur qui émet celle-ci. La présence ou non du capteur de présence humaine est importante car c'est le résultat de cette requête qui va être déterminante pour la sélection du haut-parleur à utiliser pour émettre l'alarme sonore.

A cet effet, les étapes illustrées par les différentes cases de cet organigramme sont définies comme suit :
30 : l'oreillette est-elle hors du périmètre déterminé par rapport au téléphone cellulaire OUI/NON ?
31 : capteur de présence OUI/NON ?
32 : Oreillette sur oreille de l'utilisateur OUI/NON ?
33 : Emettre l'alarme sur le second haut-parleur (ne pas couper le premier haut parleur qui peut être actif en cas de communication)
34 : ne pas émettre d'alarme
35 : Déclencher l'alarme avec le volume maximum
36 . Atténuer le volume de l'alarme sonore
37 : Fin

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, il est possible de prévoir que ce soit le téléphone cellulaire qui émette l'alarme sonore et qui comprenne le capteur de présence humaine, une partie du circuit de détection d'éloignement, et l'atténuateur de volume.

## Revendications

1. Dispositif de contrôle de l'éloignement d'un accessoire portable de téléphonie (20), constitué par une oreillette ou un casque, comportant au moins un haut-parleur (23a) et fonctionnant selon une norme de télécommunication sans fil telle que la norme Bluetooth, et d'un téléphone cellulaire (10) fonctionnant avec la même norme et avec lequel ledit accessoire est jumelé, **caractérisé en ce qu'**il comprend un circuit électronique (24) intégré dans l'accessoire de téléphonie (20) ou dans le téléphone cellulaire (10) et conçu pour permettre à l'appareil (10 ; 20) dans lequel il est intégré d'émettre une alarme sonore lorsque le téléphone cellulaire (10) et l'accessoire de téléphonie (20) sont situés à distance l'un de l'autre, au-delà d'un périmètre déterminé.

2. Dispositif selon la revendication 1, **caractérisé en ce qu'**il comprend en outre un moyen (26) pour atténuer le volume de l'alarme sonore lorsque l'appareil (10 ; 20) émettant celle-ci est à proximité immédiate de l'oreille d'un utilisateur.

3. Dispositif selon la revendication 2, **caractérisé en ce qu'**il comporte un capteur de présence humaine (28) couplé au moyen d'atténuation du volume de l'alarme (26).

4. Dispositif selon la revendication 3, **caractérisé en ce que** le circuit électronique (24) et le capteur de présence humaine (28) sont situés dans l'accessoire de téléphonie (20).

5. Dispositif selon la revendication 4, **caractérisé en ce que** le capteur de présence humaine (28) comporte un aimant (32) intégré dans un support (30) prévu pour recevoir l'accessoire de téléphonie (20) et coopérant avec le haut-parleur (23a) de ce dernier de sorte que, lorsque l'accessoire de téléphonie (20) repose sur le support (30), le capteur (28) détecte la présence dudit accessoire par accouplement électromagnétique de l'aimant (32) et du haut-parleur (23a) et désactive le moyen d'atténuation du volume de l'alarme (25).

6. Dispositif selon la revendication 5, **caractérisé en ce que** le capteur de présence humaine (28) est couplé à l'alimentation de l'accessoire de téléphonie (20) de manière à le mettre en mode veille lorsque ce dernier repose sur le support (30).

7. Dispositif selon l'une quelconque des revendications précédentes, **caractérisé en ce que** l'accessoire de téléphonie (20) est équipé d'un autre haut-parleur (23b) disposé à l'opposé du premier haut-parleur (23a) et destiné à être activé à la place de ce dernier pour émettre l'alarme sonore lorsque l'accessoire de téléphonie (20) est sur l'oreille de l'utilisateur.

8. Dispositif selon l'une quelconque des revendications précédentes, **caractérisé en ce qu'**il comporte un circuit de détection de l'éloignement (25) de l'accessoire de téléphonie (20) et du téléphone cellulaire (10) par mesure d'une variation de la fréquence d'apparition d'au moins un bit d'erreur dans les trames du signal numérique de données échangé entre les deux appareils.

9. Dispositif selon l'une quelconque des revendications précédentes, **caractérisé en ce qu'**il comporte un circuit de détection de l'éloignement (25) de l'accessoire de téléphonie (20) et du téléphone cellulaire (10) par mesure, au niveau de l'accessoire de téléphonie (20), de la diminution de puissance de réception du signal numérique de données échangé avec le téléphone cellulaire (10).

10. Dispositif selon l'une quelconque des revendications précédentes, **caractérisé en ce que** le volume sonore de l'alarme est réglé pour que celle-ci puisse être entendue dans un rayon d'environ 10 mètres autour de l'appareil (10 ; 20) qui l'émet.

11. Dispositif selon l'une quelconque des revendications précédentes, **caractérisé en ce que** l'accessoire de téléphonie (20) comporte un bouton (29) d'activation ou de désactivation du déclenchement de l'alarme sonore.
